# EUROPEAN PATENT SPECIFICATION

(11) **EP 4 262 275 B1**
(45) Date of publication and mention of the grant of the patent: **02.09.2026**
(21) Application number: 21916851.5
(22) Date of filing: 08.01.2021
(51) Int. Cl.: H04W 36/00, H04W 48/16

(54) **WIRELESS COMMUNICATION METHOD AND TERMINAL DEVICE**
DRAHTLOSKOMMUNIKATIONSVERFAHREN UND ENDGERÄTEVORRICHTUNG
PROCÉDÉ DE COMMUNICATION SANS FIL ET DISPOSITIF DE TERMINAL

(43) Date of publication of application: 18.10.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN)
(74) Representative: Novagraaf Technologies
(86) International application number: PCT/CN2021/070969
(87) International publication number: WO 2022/147796

(56) References cited:
- EP-A1- 3 589 016
- WO-A1-2018/127843
- WO-A1-2018/226055
- WO-A1-2020/222211
- CN-A- 111 149 387
- CN-A- 111 726 844
- US-A1- 2012 258 750
- US-A1- 2019 268 840
- OPPO: "Consideration on slice-based cell (re)selection", vol. RAN WG2, no. E-meeting; 20201101, 23 October 2020 (2020-10-23), XP051942494, Retrieved from the Internet <URL:https://ftp.3gpp.org/tsg_ran/WG2_RL2/TSGR2_112-e/Docs/R2-2009542.zip R2-2009542 - Consideration on slice-based cell (re)selection.doc> [retrieved on 20201023]
- OPPO: "Consideration on slice-based cell (re)selection", 3GPP DRAFT; R2-2009542, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-meeting; 20201101, 23 October 2020 (2020-10-23), Mobile Competence Centre ; 650, route des Lucioles ; F-06921 Sophia-Antipolis Cedex ; France , XP051942494
- VICE CHAIRMAN (NOKIA): "Report on LTE legacy, Mobility, DCCA, Multi-SIM and RAN slicing", 3GPP DRAFT; R2-2010701, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20201102 - 20201113, 16 November 2020 (2020-11-16), Mobile Competence Centre ; 650, route des Lucioles ; F-06921 Sophia-Antipolis Cedex ; France , XP051955316

## Description

### TECHNICAL FIELD

The present disclosure relates to the field of communication technologies, and in particular to a wireless communication method and a terminal device.

### BACKGROUND

Currently, network devices can indicate information related to a slice (i.e., network slice) through the system information block (SIB), e.g., slice-related frequency priority information \; while the radio resource control (RRC) release can also indicate frequency priority information, and the RRC release message may not indicate slice-related information, i.e., the RRC release message may indicate frequency priority information independent of the network slice. Currently, the frequency priority information in the RRC release message is valid before the T320 timer timeout and before terminal devices enter an RRC connected state. When a terminal device has the frequency priority information in the RRC release message and the frequency priority information is valid, the terminal device gives priority to use the frequency priority information in the message for cell selection or cell reselection or network device access, and does not use the frequency priority information in the SIB for cell selection or cell reselection or network device access, which lacks flexibility.

EP3589016A1 and US2012/258750A1 disclose that a user equipment receives priority information per frequency for cell reselection through the SIB and priority information per frequency for cell reselection through the RRC connection release message as dedicated RRC signaling.

### SUMMARY OF THE DISCLOSURE

The embodiments of the present disclosure provide a wireless communication method and a terminal device, thereby improving the flexibility of cell selection or reselection or network device access.

In a first aspect, the present invention provides a wireless communication method which is defined in claim 1.

In a second aspect, the present invention provides a terminal device which is defined in claim 16.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWINGS

FIG. 1 is a schematic view of an architecture of a communication system according to an embodiment of the present disclosure.
FIG. 2 is an interaction flowchart of a wireless communication method according to an embodiment of the present disclosure.
FIG. 3 is a schematic block view of a terminal device 300 according to an embodiment of the present disclosure.
FIG. 4 is a structural schematic view of a communication device 400 according to an embodiment of the present disclosure.
FIG. 5 is a structural schematic view of an apparatus according to an embodiment of the present disclosure.

### DETAILED DESCRIPTION

The technical solutions in the embodiments of the present disclosure will be described below in conjunction with the accompanying drawings in the embodiments of the present disclosure. Any embodiment in the description that does not fall within the scope of the claims shall be regarded as an example for understanding the present invention.

The embodiments of the present disclosure may be applied to various communication systems, such as global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolutionary system for NR system, LTE-based access to unlicensed spectrum (LTE-U) system, NR-based access to unlicensed spectrum (NR-U) system, universal mobile telecommunication system (UMTS), wireless local area networks (WLAN), wireless fidelity (Wi-Fi), next generation communication system, or other communication systems, etc.

Generally, conventional communication systems support a limited number of connections and are easy to implement. However, with the development of communication technologies, mobile communication systems will support not only conventional communication but also, for example, device-to-device (D2D) communication, machine-to-machine (M2M) communication, machine-type communication(MTC), vehicle-to-vehicle (V2V) communication, etc., and the present disclosure may be applied to these communication systems as well.

In some embodiments, the communication system in the embodiments of the present disclosure may be applied to carrier aggregation (CA) scenarios, to dual connectivity (DC) scenarios, and to standalone (SA) deployment scenarios.

The embodiments of the present disclosure are not limited to the spectrum to which they are applied. For example, the embodiments of the present disclosure may be applied to licensed spectrum or to license-free spectrum.

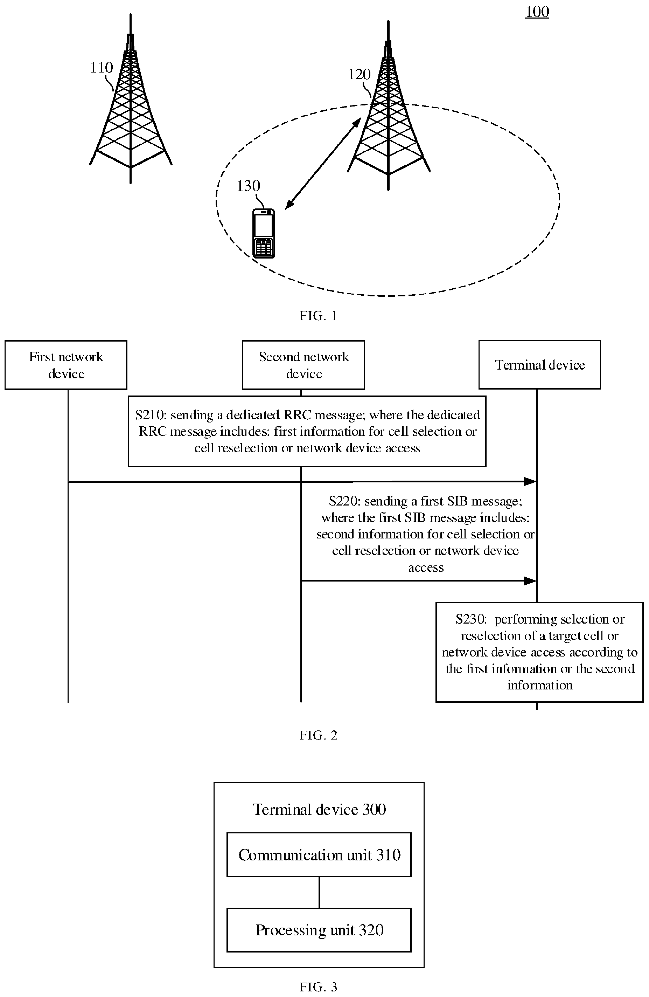

Exemplarily, a communication system 100 applied in the embodiments of the present disclosure is shown in FIG. 1. The communication system 100 may include a first network device 110 and a second network device 120, and each of the first network device 110 and the second network device 120 may communicate with a terminal device 130 (or referred to as a communication terminal, terminal). Both the first network device 110 and the second network device 120 may provide communication coverage for a specific geographic area and may communicate with terminal devices located within the coverage area.

FIG. 1 exemplarily illustrates two network devices and one terminal device. In some embodiments, the communication system 100 may include more network devices and other numbers of terminal devices may be included within the coverage area of each network device, without limitation in the embodiments of the present disclosure.

It should be understood that FIG. 1 exemplarily illustrates the terminal device 130 currently moving into a cell covered by the second network device 120. In some embodiments, the terminal device 130 may be located in a cell covered by the first network device 110, in which case the terminal device 130 is in an unconnected state with the second network device 120.

In some embodiments, the communication system 100 may further include other network entities such as network controllers, mobile management entities, etc., which are not limited by the embodiments of the present disclosure.

It should be understood that a device with a communication function in the network/system in the embodiments of the present disclosure may be referred to as a communication device. Taking the communication system 100 illustrated in FIG. 1 as an example, the communication device may include the first network device 110, the second network device 120, and the terminal device 130 having communication functions, and the first network device 110, the second network device 120, and the terminal device 130 may be specific devices as described above and will not be described herein. The communication devices may further include other devices in the communication system 100, such as network controller, mobile management entity, and other network entities, which are not limited in the embodiments of the present disclosure.

It is understood that the terms "system" and "network" are often used interchangeably in this document. The term "and/or" is only a description of an association relationship of associated objects, indicating that three relationships may exist, for example, A and/or B, which can indicate: the existence of A alone, the existence of both A and B, and the existence of B alone. In addition, the character "/" generally indicates that the associated objects before and after is in an "or" relationship.

The present disclosure describes various embodiments in conjunction with a terminal device and a network device. The terminal device may also be referred to as user equipment (UE), an access terminal, a user unit, a user station, a mobile station, a mobile platform, a remote station, a remote terminal, a mobile device, a user terminal, a terminal, a wireless communication device, a user agent, or a user device, etc. The terminal device may be a station (STAION, ST) in WLAN, a cellular phone, a cordless phone, a session initiation protocol (SIP) phone, a wireless local loop (WLL) station, a personal digital assistant (PDA) devices, handheld devices with wireless communication capabilities, computing devices or other processing devices connected to a wireless modem, in-vehicle devices, wearable devices, and terminals in next-generation communication systems, such as NR networks or future evolved public land mobile network (PLMN) network, etc.

By way of example and not limitation, in the embodiments of the present disclosure, the terminal device may also be a wearable device. The wearable device can also be called a wearable smart device, which is a general term for a device that can be worn by applying wearable technology to intelligently design and develop everyday wear, such as glasses, gloves, watches, apparel and shoes, etc. The wearable device is a portable device that is worn directly on the body or integrated into the user's clothing or accessories. The wearable device is not only a hardware device, but also a powerful function through software support as well as data interaction and cloud interaction. Broadly speaking, the wearable smart device includes full-featured and large-sized devices that can achieve complete or partial functions without relying on smartphones, such as smart watches or smart glasses, and devices that only focus on a certain type of application and need to be used in conjunction with other devices (e.g., smartphones), such as smart bracelets and smart jewelry for various types of physical signs monitoring.

The network device may be a device configured to communicate with mobile devices, the network device may be an access point (AP) in WLAN, a base transceiver station (BTS) in GSM or CDMA, a base station (NodeB, NB) in WCDMA, an evolutional base Station (Evolutional Node B, eNB or eNodeB) in LTE, a relay station or access point, a vehicle device, a wearable device, a network device or a base station (gNB) in NR network, or a network device in a future evolved PLMN network, etc.

In the embodiments of the present disclosure, the network device provides service to the cell, and the terminal device communicates with the network device through transmission resources (e.g., frequency domain resources, or spectrum resources) used by the cell. The cell may correspond to the network device (e.g., a base station), and the cell may belong to a macro base station, or a base station corresponding to a small cell, where the small cell may include: Metro cell, Micro cell, Pico cell, Femto cell, etc. These small cells have the characteristics of small coverage area and low transmitting power, which are suitable for providing high speed data transmission services.

Before describing the technical solution of the present disclosure, the slice, i.e., network slice, is described below.

A network slice is composed of a radio access network (RAN) part and a core network (CN) part. Different network slice has different network slicing selection assistance information (NSSAI).

Network support for network slice relies on carrying data communications belonging to different network slice and different transmission performance requirements (e.g., reliability, transmission delay, transmission rate, etc.) in different protocol data unit (PDU) sessions.

For example, the network will carry enhanced mobile broadband (eMBB) and ultra-reliable and low latency communication (URLLC) services on different PDU sessions. Each different PDU session may have multiple quality of service flows (QoS Flows).

In the downlink direction, the non-access stratum (NAS) service data flow (SDF) template of the core network classifies and maps packets from different application layers to different QoS Flows in different PDU sessions and sends them to the RAN in different PDU sessions. The RAN maps the QoS Flow to different data radio bearer (DRB) and sends it to the UE on the air interface based on the ID information of the QoS Flow.

The strong demand for wireless communications in vertical markets is clear to all. To meet the vertical industry's needs for latency, mobility, reliability, and location accuracy, the RAN needs to be enhanced on how to support vertical services in the access network. One way to achieve this is to provide more targeted offerings with lower latency, greater flexibility, and higher scalability for multiple services with different needs based on network slice. More specifically, the network slice of the RAN part enables application providers to participate in the design, deployment, and operation of a customized RAN to better support the application provider's business. Therefore, Release (R) 17 introduces access network enhancements to network slice, specifically related to the following.

Slice based cell reselection under network control.

Slice based random access channel (RACH) configuration or access barring.

As mentioned above, currently, the network device can indicate information related to network slice through the system information block (SIB), e.g., slice-related frequency priority information ; while the radio resource control (RRC) release can also indicate frequency priority information , and the RRC release message may not indicate slice-related information , i.e., the RRC release message may indicate frequency priority information independent of the network slice. Currently, the frequency priority information in the RRC release message is valid before the T320 timer timeout and before terminal devices enter an RRC connected state. When a terminal device has the frequency priority information in the RRC release message and the frequency priority information is valid, the terminal device gives priority to use the frequency priority information in the message for cell selection or cell reselection or network device access, and does not use the frequency priority information in the SIB for cell selection or cell reselection or network device access.

However, the SIB message can have slice related information , such as different frequencies and/or slice frequency priority information corresponding to different slice, while the RRC release message may carry no slice related information , but in the process of cell selection or cell reselection or network device access, slice related information may need to be considered. Therefore, it is not more appropriate to use the information in the RRC release, and based thereon, the existing cell selection or cell reselection or network device access methods lack flexibility.

To solve the above technical problems, in the present disclosure, the terminal device may use the information in the RRC release message or the information in the SIB message for cell selection or cell reselection or network device access. The technical solution of the present disclosure are described as follow.

Referring to FIG. 2, FIG. 2 is an interaction flowchart of a wireless communication method according to an embodiment of the present disclosure. The method includes operations at blocks illustrated herein.

At block S210: sending, by a first network device, a dedicated RRC message to a terminal device, where the dedicated RRC message includes: first information for cell selection or cell reselection or network device access.

At block S220: sending, by a second network device, a first SIB message to the terminal device, where the first SIB message includes: second information for cell selection or cell reselection or network device access.

At block S230: performing, by the terminal device, selection or reselection of a target cell or network device access according to the first information or the second information.

It should be understood that when the terminal device resides in a cell covered by the second network device, the target cell may be the cell in which the terminal device resides or another cell when cell selection is performed. When the terminal device resides in the cell covered by the second network device, the target cell may be a cell other than the cell in which the terminal device resides when cell reselection is performed.

It should be understood that the network device access is also described as access to a cell, and the present disclosure will not be repeated herein.

In some embodiments, the dedicated RRC message is an RRC release message, but is not limited thereto.

In some embodiments, when the terminal device moves from a cell covered by the first network device to a cell covered by the second network device, the terminal device may receive the first SIB message sent by the second network device.

In some embodiments, the first SIB message may be a SIB1 message or another SIB message, which is not limited by the present disclosure.

Exemplarily, the first SIB message is the other SIB message, and the SIB1 message indicates whether there is slice information. When it is indicated that there is slice information, the slice information is carried in the first SIB message.

It should be understood that in the present disclosure, the slice information is also referred to as information related to slice or slice related information, and the present disclosure is not limited in this regard.

In some embodiments, the slice information includes at least one of the following, but not limited to: an identification of the slice, frequency information corresponding to the slice.

In some embodiments, the first information is related to the slice, and/or, the second information is related to the slice. For example, the first information is not related to the slice, and the second information is related to the slice. Another example: the first information is related to the slice, but is not related to the slice required by the terminal device, and the second information is related to the slice, and is related to the slice required by the above terminal device.

In some embodiments, the first information includes at least one of, but not limited to: cell information, frequency point information , area information , public land mobile network (PLMN) information , tracking area (TA) information , allowed closed access group (CAG) list, allowed closed subscriber group (CSG) list, disallowed CAG list, and disallowed CSG list.

In some embodiments, the second information includes at least one of, but not limited to: cell information, frequency information , area information , PLMN information , TA information , allowed CAG list, allowed CSG list, disallowed CAG list, and disallowed CSG list.

It should be noted that when the first SIB message carries the slice information, the frequency point information in the second information may be understood as the frequency point information corresponding to the slice, i.e., the frequency point information is also a kind of slice information.

In some embodiments, the cell information includes at least one of, but is not limited to: cell identification, priority information of the cell, etc.

In some embodiments, the cell involved in the cell information may be a redirected or reselected cell, but is not limited thereto.

In some embodiments, the frequency point information includes, but is not limited to, frequency point priority information .

In some embodiments, the frequency point involved in the frequency point information may be a redirected or reselected frequency point, but is not limited thereto.

In some embodiments, the area information includes, but is not limited to, an RAN area code.

In some embodiments, the PLMN information includes, but is not limited to, a PLMN identification.

In some embodiments, the TA information includes, but is not limited to, a TA code.

In some embodiments, the terminal device may perform the selection or reselection of the target cell or the network device access according to the first information or the second information by, but not limited to: a predefined way or a preset rule.

In summary, in the present disclosure, the terminal device can perform the selection or reselection of the target cell or the network device access according to the first information or the second information, instead of selecting or reselecting the target cell or accessing the network device according to only the first information when the first information is valid. Therefore, the flexibility of cell selection or cell reselection or network device access is improved.

As described above, the terminal device can select the first information or the second information by a preset rule for the selection or reselection of the target cell or the network device access. The preset rule is described in detail below.

In some embodiments, the preset rule is related to at least one of the first network device, the second network device, the terminal device, the first information, and the second information.

In an implementation, the selection or reselection of the target cell or the network device access is performed according to the first information when the preset rule includes at least one of, but not limited to, the following.

The first network device supports a slice.

The first network device broadcasts slice information.

The first network device is a network device after the Release 17.

The second network device does not support a slice.

The second network device does not broadcast slice information.

The second network device is not a network device after the Release 17.

The first information includes cell selection or cell reselection information or network device access information for a first slice or a first slice group.

The information indicated in the first information is for cell selection or cell reselection information or network device access information for the first slice or the first slice group.

The first information includes cell selection or cell reselection information or network device access information corresponding to a first parameter or a first parameter group.

The information indicated in the first information is for cell selection or cell reselection information or network device access information corresponding to the first parameter or the first parameter group.

The terminal device supports a slice.

The terminal device is a terminal after the Release 17.

The terminal device has required slices.

By default, the selection or reselection of the target cell or the network device access is performed according to the first information.

It should be understood that the first slice is configured to perform the selection or reselection of the target cell or the network device access, or the first slice is a slice required by the terminal device.

It should be understood that the terminal device may require only one slice, which is the first slice. Alternatively, the terminal device may require multiple slices, in which case the first slice is any one of the multiple slices required by the terminal device, or, in which case the first slice is a particular slice of the multiple slices required by the terminal device.

It should be understood that the first slice group is configured to perform the selection or reselection of the target cell or the network device access, or the first slice group is a slice group required by the terminal device.

In some embodiments, the first slice group includes at least one slice.

It should be understood that the first parameter corresponds to the first slice. For example, the first parameter is an access category corresponding to the first slice.

It should be understood that the first parameter group corresponds to the first slice group.

In some embodiments, the first parameter group includes at least one first parameter corresponding to at least one first slice respectively. The first parameter may be an access category corresponding to the first slice.

In some embodiments, the first parameter group includes at least one first parameter corresponding to the first slice group. The first parameter may be an access category corresponding to the first slice group.

It should be understood that when the first information includes the cell selection or cell reselection information or network device access information corresponding to the first parameter or the first parameter group, and/or, the information indicated in the first information is for the cell selection or cell reselection information or network device access information corresponding to the first parameter or the first parameter group, since the first parameter corresponds to the first slice and the first parameter group corresponds to the first slice group, it is implicitly indicated that the first information is related to the slice.

In some embodiments, the cell selection or cell reselection information or network device access information is also referred to as information for cell selection or cell reselection or network device access.

In some embodiments, the cell selection or cell reselection information or network device access information includes at least one of, but is not limited to: cell information, frequency information , area information , PLMN information , TA information , allowed CAG list, allowed CSG list, disallowed CAG list, disallowed CSG list.

It should be understood that in the present disclosure, R17 (Release 17) is also referred to as NR R17.

In another implementation way, the selection or reselection of the target cell or the network device access is performed according to the first information when the preset rule includes at least one of, but are not limited to, the following.

The first network device supports a slice.

The first network device broadcasts slice information.

The first network device is a network device after the Release 17.

The second network device does not support a slice.

The second network device does not broadcast slice information.

The second network device is not a network device after the Release 17.

The first information does not include cell selection or cell reselection information or network device access information for the first slice or the first slice group, and the terminal device does not support a slice.

The first information does not include cell selection or cell reselection information or network device access information for the first slice or the first slice group, and the terminal device is not a terminal after the Release 17.

The first information does not include cell selection or cell reselection information or network device access information for the first slice or the first slice group, and the terminal device does not have required slices.

The information indicated in the first information is not for cell selection or cell reselection information or network device access information for the first slice or the first slice group, and the terminal device does not support a slice.

The information indicated in the first information is not for cell selection or cell reselection information or network device access information for the first slice or the first slice group, and the terminal device is not a terminal after the Release 17.

The information indicated in the first information is not for cell selection or cell reselection information or network device access information for the first slice or first slice group, and the terminal device does not have required slices.

The first information does not include cell selection or cell reselection information or network device access information corresponding to the first parameter or the first parameter group, and the terminal device does not support a slice.

The first information does not include cell selection or cell reselection information or network device access information corresponding to the first parameter or the first parameter group, and the terminal device is not a terminal after the Release 17.

The first information does not include the cell selection or cell reselection information or network device access information corresponding to the first parameter or the first parameter group, and the terminal device does not have required slices.

The information indicated in the first information is not for the cell selection or cell reselection information or network device access information corresponding to the first parameter or the first parameter group, and the terminal device does not support a slice.

The information indicated in the first information is not for the cell selection or cell reselection information or network device access information corresponding to the first parameter or the first parameter group, and the terminal device is not a terminal after the Release 17.

The information indicated in the first information is not for the cell selection or cell reselection information or network device access information corresponding to the first parameter or the first parameter group, and the terminal device does not have required slices.

By default, selection or reselection of the target cell or network device access is performed according to the first information .

The explanatory description of the first slice, the first slice group, the first parameter, and the first parameter group may be referred to above, and the present disclosure will not be repeated in this regard.

In a further implementation, the selection or reselection of the target cell or the network device access is performed according to the second information when the preset rule includes at least one of, but is not limited to, the following.

The first network device does not support a slice.

The first network device does not broadcast slice information.

The first network device is not a network device after the Release 17.

The second network device supports a slice.

The second network device broadcasts slice information.

The second network device is a network device after the Release 17.

The terminal device supports a slice.

The terminal device is a terminal after the Release 17.

The slice required by the terminal device is different from the slice related to the first information.

The slice required by the terminal device is the same as the slice related to the second information.

The second information includes cell selection or cell reselection information or network device access information for the first slice or the first slice group.

The information indicated in the second information is for the cell selection or cell reselection information or network device access information for the first slice or first slice group.

The first information does not include the cell selection or cell reselection information or network device access information for the first slice or first slice group.

The information indicated in the first information is not for the cell selection or cell reselection information or network device access information for the first slice or first slice group.

The second information includes the cell selection or cell reselection information or network device access information corresponding to the first parameter or the first parameter group.

The information indicated in the second information is for the cell selection or cell reselection information or network device access information corresponding to the first parameter or the first parameter group.

The first information does not include the cell selection or cell reselection information or network device access information corresponding to the first parameter or the first parameter group.

The information indicated in the first information is not for the cell selection or cell reselection information or network device access information corresponding to the first parameter or the first parameter group.

By default, the selection or reselection of the target cell or the network device access is performed according to the second information.

The explanatory description of the first slice, the first slice group, the first parameter, and the first parameter group may be referred to above, and the present disclosure will not be repeated in this regard.

Exemplarily, suppose that the slice required by the terminal device is slice 1 and the slice related to the first information is slice 2, in which case the slice required by the terminal device and the slice related to the first information may be said to be different.

Exemplarily, suppose that the slice required by the terminal device is slice 1 and the slice related to the second information is slice 1, in which case the slice required by the terminal device and the slice related to the second information may be said to be the same.

In some embodiments, the dedicated RRC message and/or the first SIB message further includes at least one of: an application range of the first information, a first preset time period, first indication information, an application range of the second information , and second indication information .

Alternatively, the first information and/or the second information further includes at least one of: an application range of the first information , a first preset time period, first indication information , an application range of the second information , and second indication information .

The first preset time period is a time period in which the selection or reselection of the target cell or the network device access is performed according to the first information. The first indication information is configured to indicate whether the selection or reselection of the target cell or the network device access is performed according to the first information. The second indication information is configured to indicate whether the selection or reselection of the target cell or the network device access is performed according to the second information.

Example 1, the dedicated RRC message further includes at least one of: the application range of the first information, the first preset time period, and the first indication information; and the first SIB message further includes at least one of: the application range of the second information , and the second indication information .

Example 2, the first information further includes at least one of: the application range of the first information , the first preset time period, and the first indication information ; and the second information further includes at least one of: the application range of the second information , and the second indication information .

Example 3, the dedicated RRC message further includes at least one of: the application range of the first information, the first indication information; and the first SIB message further includes at least one of: the first preset time period, the application range of the second information, the second indication information.

Example 4, the first information further includes at least one of: the application range of the first information , the first indication information ; and the second information further includes at least one of: the first preset time period, the application range of the second information , the second indication information.

In some embodiments, the preset rule is related to at least one of: the application range of the first information, the first information, the first preset time period, the first indication information, the application range of the second information, the second indication information, the first SIB message, a second SIB message sent by the first network device, the first network device, the second network device, and the slice required by the terminal device.

The preset rule is illustrated by the following example.

Example 1: the present rule is related to at least one of the first indication information and the second indication information.

In some embodiments, the selection or reselection of the target cell or the network device access is performed according to the first information when the preset rule includes at least one of the following.

The first indication information indicates that the selection or reselection of the target cell or the network device access is performed according to the first information.

The second indication information does not indicate that the selection or reselection of the target cell or the network device access is performed according to the second information, or indicates that the selection or reselection of the target cell or the network device access is performed not according to the second information.

It is to be understood that the second indication information not indicating that the selection or reselection of the target cell or the network device access is performed according to the second information may mean that the second indication information is not present in the second information. And the second indication information indicating that the selection or reselection of the target cell or the network device access is not performed according to the second information may mean that the second indication information is present in the second information, and the second indication information indicates that the selection or reselection of the target cell or the network device access is not performed according to the second information. For example, when the second indication information takes the value of 0, it indicates that the selection or reselection of the target cell or the network device access is not performed according to the second information.

In some embodiments, the selection or reselection of the target cell or the network device access is performed according to the first information when the preset rule includes at least one of the following: the first indication information indicates that the selection or reselection of the target cell or the network device access is performed according to the first information , and the second indication information indicates that the selection or reselection of the target cell or the network device access is performed according to the second information , in which case by default the selection or reselection of the target cell or the network device access is performed according to the first information .

In some embodiments, the selection or reselection of the target cell or the network device access is performed according to the second information when the preset rule includes at least one of the following.

The first indication information does not indicate that the selection or reselection of the target cell or the network device access is performed according to the first information, or indicates that the selection or reselection of the target cell or the network device access is not performed according to the first information.

The second indication information indicates that the selection or reselection of the target cell or the network device access is performed according to the second information.

It is to be understood that the first indication information not indicating that the selection or reselection of the target cell or the network device access is performed according to the first information may mean that the first indication information is not present in the first information. The first indication information indicating that the selection or reselection of the target cell or the network device access is performed not according to first information may mean that the first indication information is present in the first information, and the first indication information indicates that the selection or reselection of the target cell or the network device access is performed not according to first information. For example, when the first indication information takes the value of 0, it indicates that the selection or reselection of the target cell or the network device access is not performed according to the first information.

In some embodiments, the selection or reselection of the target cell or the network device access is performed according to the second information when the preset rule includes at least one of the following: the first indication information indicates that the selection or reselection of the target cell or the network device access is performed according to the first information , and the second indication information indicates that the selection or reselection of the target cell or the network device access is performed according to the second information , in which case by default the selection or reselection of the target cell or the network device access is performed according to the second information .

Example 2: the preset rule is related to at least one of the first indication information, the second indication information , the application range of the first information , and the application range of the second information .

In some embodiments, the selection or reselection of the target cell or the network device access is performed according to the first information or the second information when the preset rule includes at least one of the following.

When the first indication information indicates that the selection or reselection of the target cell or the network device access is performed not according to the first information and the second indication information indicates that the selection or reselection of the target cell or the network device access is performed not according to the second information , the first information or the second information is selected for the selection or reselection of the target cell or the network device access according to the application range of the first information and/or the application range of the second information .

When the first indication information indicates that the selection or reselection of the target cell or the network device access is performed according to the first information , and/or, the second indication information indicates that the selection or reselection of the target cell or the network device access is performed according to the second information , the first information or the second information is selected for the selection or reselection of the target cell or the network device access according to the application range of the first information and/or the application range of the second information .

According to the application range of the first information and/or the application range of the second information, the first information or the second information is selected for the selection or reselection of the target cell or the network device access.

In some embodiments, when a current service cell of the terminal device is within the application range of the first information, the first information is selected for the selection or reselection of the target cell or the network device access. Alternatively, when the current service cell of the terminal device is not within the application range of the second information, the first information is selected for the selection or reselection of the target cell or the network device access. Alternatively, when the current service cell of the terminal device is within the application range of the first information and is not within the application range of the second information, the first information is selected for the selection or reselection of the target cell or the network device access.

In some embodiments, when the current service cell of the terminal device is within the application range of the second information, the second information is selected for the selection or reselection of the target cell or the network device access. Alternatively, when the current service cell of the terminal device is not within the application range of the first information, the second information is selected for the selection or reselection of the target cell or the network device access. Alternatively, when the current service cell of the terminal device is within the application range of the second information and is not within the application range of the first information, the second information is selected for the selection or reselection of the target cell or the network device access.

Example 3: the present rule is related to at least one of the application range of the first information, the first information , the first SIB message, the second SIB message, and the slice required by the terminal device.

In some embodiments, the selection or reselection of the target cell or the network device access is performed according to the first information when the preset rule includes at least one of the following.

The current service cell of the terminal device is located in the application range of the first information.

The first information includes slice related information.

The slice carried in the second SIB message is the same as the slice required by the terminal device.

The slice carried in the first SIB message is different from the slice required by the terminal device.

The slice carried in the first information is the same as the slice required by the terminal device.

The slice carried in the second information is different from the slice required by the terminal device.

It is to be understood that the slice carried in the second SIB message may be understood as the slice corresponding to the identification of the slice carried in the second SIB message. The slice carried in the first SIB message may be understood as the slice corresponding to the identification of the slice carried in the first SIB message.

It should be understood that when multiple slices are carried in the second SIB message and the terminal device requires multiple slices, the slice carried in the second SIB message being the same as the slice required by the terminal device means that the multiple slices carried in the second SIB message are entirely or partially the same as the multiple slices required by the terminal device, and the present disclosure does not limit in this regard.

It should be understood that when multiple slices are carried in the first SIB message and the terminal device requires multiple slices, the slice carried in the first SIB message being the same as the slice required by the terminal device means that the multiple slices carried in the first SIB message are entirely or partially the same as the multiple slices required by the terminal device, and the present disclosure does not limit in this regard.

The slice carried in the first information may be understood to be the slice corresponding to the identification of the slice carried in the first information. The slice carried in the second information may be understood as the slice corresponding to the identification of the slice carried in the second information.

It should be understood that when multiple slices are carried in the first information and the terminal device requires multiple slices, the slice carried in the first information being the same as the slice required by the terminal device means that the multiple slices carried in the first information are entirely or partially the same as the multiple slices required by the terminal device, and the present disclosure does not limit in this regard.

It should be understood that when multiple slices are carried in the second information and the terminal device requires multiple slices, the slice carried in the second information being the same as the slice required by the terminal device means that the multiple slices carried in the second information are entirely or partially the same as the multiple slices required by the terminal device, and the present disclosure does not limit in this regard.

In some embodiments, the selection or reselection of the target cell or the network device access is performed according to the second information when the preset rule includes at least one of the following.

The current service cell of the terminal device is not located in the application range of the first information.

The application range of the second SIB message does not include the current service cell.

The relationship between a frequency point and a slice carried in the second SIB message is different from the relationship between a frequency point and a slice carried in the first SIB message.

The relationship between a frequency point and a slice carried in the second SIB message is different from the relationship between a frequency point and the slice required by the terminal device.

The slice carried in the second SIB message is different from the slice required by the terminal device.

The slice carried in the first SIB message is the same as the slice required by the terminal device.

The slice carried in the first information is different from the slice required by the terminal device.

The slice carried in the second information is the same as the slice required by the terminal device.

It should be understood that the relationship between the frequency point and slice is also referred to as a correspondence between the frequency point and slice.

It should be understood that when multiple relationships are carried in the second SIB message and multiple relationships are carried in the first SIB message, where the relationships are correspondences between frequency points and slices, the relationship between the frequency point and slice carried in the second SIB message being different from the relationship between the frequency point and slice carried in the first SIB message may be understood that the relationships between the frequency points and slices carried in the second SIB message are completely different from or not exactly the same as the relationships between the frequency points and slices carried in the first SIB message, and the present disclosure does not limit in this regard.

It should be understood that when multiple relationships are carried in the second SIB message and multiple relationships exist between the frequency points and the slices required by the terminal device, where the relationships are correspondences between frequency points and slices, the relationship between the frequency point and the slice carried in the second SIB message being different from and the relationship between a frequency point and the slice required by the terminal device may be understood as the relationships between the frequency points and the slices carried in the second SIB message are completely different from or not exactly the same as the relationships between the frequency points and the slices required by the terminal device, and the present disclosure does not limit in this regard.

In some embodiments, when the relationship between the frequency point and the slice carried in the second SIB message is different from the relationship between the frequency point and the slice carried in the first SIB message, the terminal device sets the priority of the frequency point carried in the first SIB message as a high priority, and/or, sets the priority corresponding to the frequency point carried in the first information as a low priority.

It should be understood that in the present disclosure, the high priority and low priority may be relative concepts, for example, the priority of the frequency carried in the first SIB message is a first priority, the priority corresponding to the frequency carried in the first information is a second priority, and the first priority is higher than the second priority, in which case the first priority is a high priority or a high priority relative to the second priority, and the second priority is a low priority or a low priority relative to the first priority. Another example: the priority of the frequency point carried in the first SIB message is a first priority, the priority corresponding to the frequency point carried in the first information is a second priority, in which case the first priority is higher than a preset priority and the first priority is a high priority, the second priority is lower than the preset priority and the second priority is a low priority.

In some embodiments, the selection or reselection of the target cell or the network device access is performed according to the first information or the second information when the preset rule includes at least one of the following.

The application range of the second SIB message includes the current service cell.

The relationship between the frequency point and the slice carried in the second SIB message is the same as the relationship between the frequency point and the slice carried in the first SIB message.

The relationship between the frequency point and the slice carried in the second SIB message is the same as the relationship between a frequency point and the slice required by the terminal device.

The relationship between the slice carried in the second SIB message and the slice required by the terminal device is the same as the relationship between the slice carried in the first SIB message and the slice required by the terminal device.

The relationship between the slice carried in the second information and the slice required by the terminal device is the same as the relationship between the slice carried in the first information and the slice required by the terminal device.

It should be noted that in this implementation, the first information or the second information may be selected for the selection or reselection of the target cell or the network device access combined with instructions of the network device or according to certain preset rule by the terminal device, for example, when the above conditions are met, the terminal device selects the first information or the second information for the selection or reselection of the target cell or the network device access by default.

Example 4: the preset rule is related to at least one of the first network device, the second network device, and the terminal device.

In some embodiments, the selection or reselection of the target cell or the network device access is performed according to the first information when the preset rule includes any of the following.

The second network device is a legacy device, and the first network device is an enhanced network device or has slice information.

The second network device is a legacy device, the first network device is an enhanced network device or has slice information, and the terminal device meets a first condition.

The second network device is a legacy device, the first network device is an enhanced network device or has slice information, and the terminal device meets a second condition.

It should be understood that in the present disclosure, the legacy device refers to a network device that is not enhanced and/or does not have slice information.

In some embodiments, the first condition includes at least one of the following.

The terminal devices support a slice.

The terminal device has required slices.

The terminal device is a terminal device after the Release 17.

In some embodiments, the second condition includes at least one of the following.

The terminal device does not support a slice.

The terminal device does not have required slices.

The terminal device is not a terminal device after the Release 17.

In some embodiments, the selection or reselection of the target cell or the network device access is performed according to the second information when the preset rule includes any of the following.

The first network device is a legacy device, and the second network device is an enhanced network device or has slice information.

The second network device is a legacy device, the first network device is an enhanced network device or has slice information, and the terminal device meets the first or second condition.

It should be understood that explanatory notes on the legacy device, the first condition, and the second condition may be found above and are not repeated in the present disclosure.

In some embodiments, in the present disclosure, the terminal device sets the frequency point corresponding to the required slice as a high priority, and/or, the terminal device sets the frequency points corresponding to the slices other than the required slice as a low priority.

It should be understood that the high priority and low priority herein are also relative concepts, as described above, and the present disclosure will not be repeated in this regard.

In summary, in the present disclosure, the terminal device can select the first information or the second information according to the preset rule for the selection or reselection of the target cell or the network device access, thereby improving the flexibility of cell selection or cell reselection or network device access.

In the invention, before the terminal device performs the selection or reselection of the target cell or the network device access according to the first information or the second information, the terminal device determines whether a preset condition is met. When the preset condition is met, the terminal device performs the selection or reselection of the target cell or the network device access according to the first information or the second information. When the preset condition is not met, the selection or reselection of the target cell or the network device access is not performed according to the first information or the second information.

In the invention, the preset condition includes that the first information and the second information are different. For example, the first information includes frequency priority information that is not related to the slice. The second information includes slice-related frequency priority information.

In an implementation, the preset condition further includes at least one of, but is not limited to, the following.

The terminal devices support a slice.

The terminal device has required slices.

The terminal device is a terminal device after the Release 17.

The first network device supports a slice.

The first network device broadcasts slice information.

The first network device is a network device after the Release 17.

The second network device supports a slice.

The second network device broadcasts slice information.

The second network device is a network device after the Release 17.

The slice supported by the network device is the slice required by the terminal device.

In another implementation, the preset condition further includes at least one of, but is not limited to, the following.

The terminal device does not support a slice.

The terminal device does not have required slices.

The terminal device is not a terminal device after the Release 17.

The first network device does not support a slice.

The first network device does not broadcast slice information.

The first network device is not a network device after the Release 17.

The second network device does not support a slice.

The second network device does not broadcast slice information.

The second network device is not a network device after the Release 17.

The slice supported by the network device is not the slice required by the terminal device.

In summary, in the present disclosure, when the preset condition is met, the terminal device performs the selection or reselection of the target cell or the network device access according to the first information or the second information , and when the preset condition is not met, the terminal device does not perform the selection or reselection of the target cell or the network device access according to the first information or the second information , thereby improving the flexibility of cell selection or cell reselection or network device access.

The method embodiments of the present disclosure are described in detail above in connection with FIG. 2, and the device embodiments of the present disclosure are described in detail below in connection with FIGS. 3 to 5. It should be understood that the device embodiments and the method embodiments correspond to each other, and similar descriptions can be referred to the method embodiments.

Referring to FIG. 3, FIG. 3 is a schematic block view of a terminal device 300 according to an embodiment of the present disclosure. The terminal device 300 includes the following elements.

A communication unit 310, configured to receive a dedicated RRC message sent by a first network device and receive a first SIB message sent by a second network device; where the dedicated RRC message includes: first information for cell selection or cell reselection or network device access, and the first SIB message includes: second information for cell selection or cell reselection or network device access.

A processing unit 320, configured to perform selection or reselection of a target cell or network device access according to the first information or the second information.

In some embodiments, the first information is related to the slice and/or the second information is related to the slice.

In some embodiments, the terminal device performing the selection or reselection of the target cell or the network device access according to the first information or the second information is predefined or determined according to a preset rule.

In some embodiments, the preset rule is related to at least one of the first network device, the second network device, the terminal device, the second information, and the first information.

In some embodiments, the processing unit is specifically configured to perform the selection or reselection of the target cell or the network device access according to the first information when the preset rule includes at least one of the following.

The first network device supports a slice.

The first network device broadcasts slice information.

The first network device is a network device after the Release 17.

The second network device does not support a slice.

The second network device does not broadcast slice information.

The second network device is not a network device after the Release 17.

The first information includes cell selection or cell reselection information or network device access information for a first slice or a first slice group.

The information indicated in the first information is for cell selection or cell reselection information or network device access information for the first slice or the first slice group.

The first information includes cell selection or cell reselection information or network device access information corresponding to the first parameter or the first parameter group.

The information indicated in the first information is for cell selection or cell reselection information or network device access information corresponding to a first parameter or a first parameter group.

The terminal device supports a slice.

The terminal device is a terminal after the Release 17.

The terminal device has required slices.

By default, the selection or reselection of the target cell or the network device access is performed according to the first information.

The first slice is configured to perform the selection or reselection of the target cell or the network device access, or the first slice is a slice required by the terminal device. The first slice group is configured to perform the selection or reselection of the target cell or the network device access, or, the first slice group is a slice group required by the terminal device. The first parameter corresponds to the first slice. The first parameter group corresponds to the first slice group.

In some embodiments, the processing unit is specifically configured to perform the selection or reselection of the target cell or the network device access according to the first information when the preset rule includes at least one of the following.

The first network device supports a slice.

The first network device broadcasts slice information.

The first network device is a network device after the Release 17.

The second network device does not support a slice.

The second network device does not broadcast slice information.

The second network device is not a network device after the Release 17.

The first information does not include cell selection or cell reselection information or network device access information for the first slice or the first slice group, and the terminal device does not support a slice.

The first information does not include cell selection or cell reselection information or network device access information for the first slice or the first slice group, and the terminal device is not a terminal after the Release 17.

The first information does not include cell selection or cell reselection information or network device access information for the first slice or the first slice group, and the terminal device does not have required slices.

The information indicated in the first information is not for cell selection or cell reselection information or network device access information for the first slice or the first slice group, and the terminal device does not support a slice.

The information indicated in the first information is not for cell selection or cell reselection information or network device access information for the first slice or the first slice group, and the terminal device is not a terminal after the Release 17.

The information indicated in the first information is not for cell selection or cell reselection information or network device access information for the first slice or first slice group, and the terminal device does not have required slices.

The first information does not include cell selection or cell reselection information or network device access information corresponding to the first parameter or the first parameter group, and the terminal device does not support a slice.

The first information does not include cell selection or cell reselection information or network device access information corresponding to the first parameter or the first parameter group, and the terminal device is not a terminal after the Release 17.

The first information does not include the cell selection or cell reselection information or network device access information corresponding to the first parameter or the first parameter group, and the terminal device does not have required slices.

The information indicated in the first information is not for the cell selection or cell reselection information or network device access information corresponding to the first parameter or the first parameter group, and the terminal device does not support a slice.

The information indicated in the first information is not for the cell selection or cell reselection information or network device access information corresponding to the first parameter or the first parameter group, and the terminal device is not a terminal after the Release 17.

The information indicated in the first information is not for the cell selection or cell reselection information or network device access information corresponding to the first parameter or the first parameter group, and the terminal device does not have required slices.

By default, selection or reselection of the target cell or network device access is performed according to the first information.

The first slice is configured to perform the selection or reselection of the target cell or the network device access, or the first slice is a slice required by the terminal device. The first slice group is configured to perform the selection or reselection of the target cell or the network device access, or, the first slice group is a slice group required by the terminal device. The first parameter corresponds to the first slice. The first parameter group corresponds to the first slice group.

In some embodiments, the processing unit is specifically configured to perform the selection or reselection of the target cell or the network device access according to the second information when the preset rule includes at least one of the following.

The first network device does not support a slice.

The first network device does not broadcast slice information.

The first network device is not a network device after the Release 17.

The second network device supports a slice.

The second network device broadcasts slice information.

The second network device is a network device after the Release 17.

The terminal device supports a slice.

The terminal device is a terminal after the Release 17.

The slice required by the terminal device is different from the slice related to the first information.

The slice required by the terminal device is the same as the slice related to the second information.

The second information includes cell selection or cell reselection information or network device access information for the first slice or the first slice group.

The information indicated in the second information is for the cell selection or cell reselection information or network device access information for the first slice or first slice group.

The first information does not include the cell selection or cell reselection information or network device access information for the first slice or first slice group.

The information indicated in the first information is not for the cell selection or cell reselection information or network device access information for the first slice or first slice group.

The second information includes the cell selection or cell reselection information or network device access information corresponding to the first parameter or the first parameter group.

The information indicated in the second information is for the cell selection or cell reselection information or network device access information corresponding to the first parameter or the first parameter group.

The first information does not include the cell selection or cell reselection information or network device access information corresponding to the first parameter or the first parameter group.

The information indicated in the first information is not for the cell selection or cell reselection information or network device access information corresponding to the first parameter or the first parameter group.

By default, the selection or reselection of the target cell or the network device access is performed according to the second information.

The first slice is configured to perform the selection or reselection of the target cell or the network device access, or the first slice is a slice required by the terminal device. The first slice group is configured to perform the selection or reselection of the target cell or the network device access, or, the first slice group is a slice group required by the terminal device. The first parameter corresponds to the first slice. The first parameter group corresponds to the first slice group.

In some embodiments, the dedicated RRC message and/or the first SIB message further includes at least one of: an application range of the first information, a first preset time period, first indication information , an application range of the second information , and second indication information .

Alternatively, the first information and/or the second information further includes at least one of: an application range of the first information , a first preset time period, first indication information , an application range of the second information , and second indication information .

The first preset time period is a time period in which the selection or reselection of the target cell or the network device access is performed according to the first information. The first indication information is configured to indicate whether the selection or reselection of the target cell or the network device access is performed according to the first information. The second indication information is configured to indicate whether the selection or reselection of the target cell or the network device access is performed according to the second information.

In some embodiments, the dedicated RRC message further includes at least one of: the application range of the first information, the first preset time period, and the first indication information.

The first SIB message further includes at least one of: the application range of the second information, the second indication information.

In some embodiments, the preset rule is related to at least one of the application range of the first information, the first information, the first preset time period, the first indication information, the application range of the second information, the second indication information , the first SIB message, a second SIB message sent by the first network device, the first network device, the second network device, and the slice required by the terminal device.

In some embodiments, the preset rule is related to at least one of the first indication information and the second indication information.

In some embodiments, the processing unit is specifically configured to perform the selection or reselection of the target cell or the network device access according to the first information when the preset rule includes at least one of the following.

The first indication information indicates that the selection or reselection of the target cell or the network device access is performed according to the first information.

The second indication information does not indicate that the selection or reselection of the target cell or the network device access is performed according to the second information, or indicates that the selection or reselection of the target cell or the network device access is performed not according to the second information .

In some embodiments, the processing unit is specifically configured to perform the selection or reselection of the target cell or the network device access according to the first information when the preset rule includes at least one of the following.

The first indication information indicates that the selection or reselection of the target cell or the network device access is performed according to the first information , and the second indication information indicates that the selection or reselection of the target cell or the network device access is performed according to the second information , in which case by default the selection or reselection of the target cell or the network device access is performed according to the first information .

In some embodiments, the processing unit is specifically configured to perform the selection or reselection of the target cell or the network device access according to the second information when the preset rule includes at least one of the following.

The first indication information does not indicate that the selection or reselection of the target cell or the network device access is performed according to the first information, or indicates that the selection or reselection of the target cell or the network device access is not performed according to the first information .

The second indication information indicates that the selection or reselection of the target cell or the network device access is performed according to the second information.

In some embodiments, the processing unit is specifically configured to perform the selection or reselection of the target cell or the network device access according to the second information when the preset rule includes at least one of the following.

The first indication information indicates that the selection or reselection of the target cell or the network device access is performed according to the first information , and the second indication information indicates that the selection or reselection of the target cell or the network device access is performed according to the second information , in which case by default the selection or reselection of the target cell or the network device access is performed according to the second information .

In some embodiments, the preset rule is related to at least one of the first indication information, the second indication information, the application range of the first information , and the application range of the second information .

In some embodiments, the processing unit is specifically configured to perform the selection or reselection of the target cell or the network device access according to the first information or the second information when the preset rule includes at least one of the following.

When the first indication information indicates that the selection or reselection of the target cell or the network device access is performed not according to the first information and the second indication information indicates that the selection or reselection of the target cell or the network device access is performed not according to the second information, the first information or the second information is selected for the selection or reselection of the target cell or the network device access according to the application range of the first information and/or the application range of the second information .

When the first indication information indicates that the selection or reselection of the target cell or the network device access is performed according to the first information, and/or, the second indication information indicates that the selection or reselection of the target cell or the network device access is performed according to the second information , the first information or the second information is selected for the selection or reselection of the target cell or the network device access according to the application range of the first information and/or the application range of the second information .

According to the application range of the first information and/or the application range of the second information, the first information or the second information is selected for the selection or reselection of the target cell or the network device access.

In some embodiments, the present rule is related to at least one of the application range of the first information, the first information , the first SIB message, the second SIB message, and the slice required by the terminal device.

In some embodiments, the processing unit is specifically configured to perform the selection or reselection of the target cell or the network device access according to the first information when the preset rule includes at least one of the following.

The current service cell of the terminal device is in the application range of the first information.

The first information includes slice related information.

The slice carried in the second SIB message is the same as the slice required by the terminal device.

The slice carried in the first SIB message is different from the slice required by the terminal device.

The slice carried in the first information is the same as the slice required by the terminal device.

The slice carried in the second information is different from the slice required by the terminal device.

In some embodiments, the processing unit is specifically configured to perform the selection or reselection of the target cell or the network device access according to the second information when the preset rule includes at least one of the following.

The current service cell of the terminal device is not located in the application range of the first information.

The application range of the second SIB message does not include the current service cell.

The relationship between a frequency point and a slice carried in the second SIB message is different from the relationship between a frequency point and a slice carried in the first SIB message.

The relationship between the frequency point and the slice carried in the second SIB message is different from the relationship between the slice and frequency point required by the terminal device.

The slice carried in the second SIB message is different from the slice required by the terminal device.

The slice carried in the first SIB message is the same as the slice required by the terminal device.

The slice carried in the first information is different from the slice required by the terminal device.

The slice carried in the second information is the same as the slice required by the terminal device.

In some embodiments, the processing unit 320 is further configured to, when the relationship between the frequency point and the slice carried in the second SIB message is different from the relationship between the frequency point and the slice carried in the first SIB message, set the priority of the frequency point carried in the first SIB message as a high priority, and/or set the priority corresponding to the frequency point carried in the first information as a low priority.

In some embodiments, the processing unit is specifically configured to perform the selection or reselection of the target cell or the network device access according to the first information or the second information when the preset rule includes at least one of the following.

The application range of the second SIB message includes the current service cell.

The relationship between the frequency point and the slice carried in the second SIB message is the same as the relationship between the frequency point and the slice carried in the first SIB message.

The relationship between the frequency point and the slice carried in the second SIB message is the same as the relationship between a frequency point and the slice required by the terminal device.

The relationship between the slice carried in the second SIB message and the slice required by the terminal device is the same as the relationship between the slice carried in the first SIB message and the slice required by the terminal device.

The relationship between the slice carried in the second information and the slice required by the terminal device is the same as the relationship between the slice carried in the first information and the slice required by the terminal device.

In some embodiments, the preset rule is related to at least one of the first network device, the second network device, and the terminal device.

In some embodiments, the processing unit is specifically configured to perform the selection or reselection of the target cell or the network device access according to the first information when the preset rule includes any of the following.

The second network device is a legacy device, and the first network device is an enhanced network device or has slice information.

The second network device is a legacy device, the first network device is an enhanced network device or has slice information, and the terminal device meets a first condition.

The first network device is a legacy device, the first network device is an enhanced network device or has slice information, and the terminal device meets a second condition.

In some embodiments, the processing unit is specifically configured to perform the selection or reselection of the target cell or the network device access according to the second information when the preset rule includes any of the following.

The first network device is a legacy device, and the second network device is an enhanced network device or has slice information.

The second network device is a legacy device, the first network device is an enhanced network device or has slice information, and the terminal device meets the first or second condition.

In some embodiments, the first condition includes at least one of the following.

The terminal devices support a slice.

The terminal device has required slices.

The terminal device is a terminal device after the Release 17.

In some embodiments, the second condition includes at least one of the following.

The terminal device does not support a slice.

The terminal device does not have required slices.

The terminal device is not a terminal device after the Release 17.

In some embodiments, the processing unit 320 is further configured to determine whether a preset condition is met. Accordingly, the processing unit 320 is specifically configured to perform the selection or reselection of the target cell or the network device access according to the first information or the second information when the preset condition is met.

In some embodiments, the preset condition includes that the first information and the second information are different.

In some embodiments, the preset condition further includes at least one of the following.

The terminal devices support a slice.

The terminal device has required slices.

The terminal device is a terminal device after the Release 17.

The first network device supports a slice.

The first network device broadcasts slice information.

The first network device is a network device after the Release 17.

The second network device supports a slice.

The second network device broadcasts slice information.

The second network device is a network device after the Release 17.

The slice supported by the network device is the slice required by the terminal device.

In some embodiments, the preset condition further includes at least one of the following.

The terminal device does not support a slice.

The terminal device does not have required slices.

The terminal device is not a terminal device after the Release 17.

The first network device does not support a slice.

The first network device does not broadcast slice information.

The first network device is not a network device after the Release 17.

The second network device does not support a slice.

The second network device does not broadcast slice information.

The second network device is not a network device after the Release 17.

The slice supported by the network device is not the slice required by the terminal device.

In some embodiments, processing unit 320 is further configured to: set the frequency point corresponding to the required slice as a high priority, and/or, set the frequency points corresponding to the slices other than the required slice as a low priority.

In some embodiments, the dedicated RRC message is an RRC release message.

In some embodiments, the first information includes at least one of: cell information , frequency point information , area information , PLMN information, TA information , allowed CAG list, allowed CSG list, disallowed CAG list, and disallowed CSG list, and/or, the second information includes at least one of: cell information , frequency point information , area information , PLMN information , TA information , allowed CAG list, allowed CSG list, disallowed CAG list, and disallowed CSG list.

In some embodiments, the frequency point information includes frequency point priority information.

In some embodiments, the communication unit may be a communication interface or transceiver, or an input-output interface of a communication chip or system-on-a-chip. The processing unit may be one or more processors.

It should be understood that the terminal device 300 according to the embodiments of the present disclosure may correspond to the terminal device in the method embodiments of the present disclosure, and that the above and other operations and/or functions of the individual units in the terminal device 300 are respectively intended to implement the corresponding processes of the terminal device in the above method embodiments, and are not repeated herein for brevity.

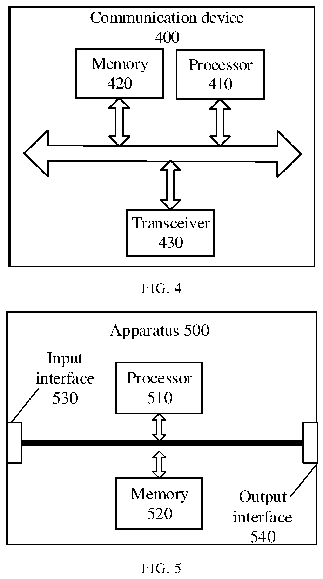

Referring to FIG. 4, FIG. 4 is a structural schematic view of a communication device 400 according to an embodiment of the present disclosure. The communication device 40 includes a processor 410 that calls and runs a computer program from a memory to implement the method in the embodiments of the present disclosure.

In the invention, as shown in FIG. 4, the communication device 400 further includes a memory 420. The processor 410 calls and runs a computer program from the memory 420 to implement the method in the embodiments of the present disclosure.

The memory 420 may be a separate device from the processor 410 or may be integrated in the processor 410.

In some embodiments, as shown in FIG. 4, the communication device 400 may further include a transceiver 430, which the processor 410 may control to communicate with other devices, specifically, to send information or data to or receive information or data from the other devices.

The transceiver 430 may include a transmitter and a receiver. The transceiver 430 may further include an antenna, and the number of antennas may be one or more.

In some embodiments, the communication device 400 may specifically be the terminal device of the embodiments of the present disclosure, and the communication device 400 may implement the corresponding processes implemented by the terminal device in each method of the embodiments of the present disclosure, which will not be repeated here for brevity.

Referring to FIG. 5, FIG. 5 is a structural schematic view of an apparatus according to an embodiment of the present disclosure. The apparatus 500 includes a processor 510 that may call and run a computer program from a memory to implement the method in the embodiments of the present disclosure.

In some embodiments, as shown in FIG. 5, the apparatus 500 may further include a memory 520. The processor 510 may call and run a computer program from the memory 520 to implement the method in the embodiments of the present disclosure.

The memory 520 may be a separate device from the processor 510 or may be integrated in the processor 510.

In some embodiments, the apparatus 500 may further include an input interface 530, which the processor 510 may control to communicate with other devices or chips, specifically, to obtain information or data sent by the other devices or chips.

In some embodiments, the apparatus 500 may further include an output interface 540, which the processor 510 may control to communicate with other devices or chips, specifically, to output information or data to the other devices or chips.

In some embodiments, the apparatus may be applied to the network device in the embodiments of the present disclosure, and the apparatus may implement the corresponding processes implemented by the network device in each method of the embodiments of the present disclosure, which will not be repeated here for brevity.

In some embodiments, the apparatus mentioned in the embodiments of the present disclosure may be a chip. For example, the apparatus may be a system-level chip, a system chip, a chip system, or a system-on-chip, etc.

The embodiments of the present disclosure further provide a communication system. The communication system includes a terminal device, a first network device, and a second network device.

The terminal device may be configured to implement the corresponding functions implemented by the terminal device in the above method, and the first network device may be configured to implement the corresponding functions implemented by the first network device or base station in the above method, and the second network device may be configured to implement the corresponding functions implemented by the second network device or base station in the above method, which will not be repeated herein for brevity.

It should be understood that the processor of the embodiments of the present disclosure may be an integrated circuit chip with signal processing capabilities. In implementation, the steps of the above method embodiments may be accomplished by integrated logic circuitry in the hardware in the processor or by instructions in the form of software. The processor may be a general-purpose processor, a digital signal processor (DSP), an application specific integrated circuit (ASIC), a field programmable gate array (FPGA) or other programmable logic device, discrete gate or transistor logic device, or discrete hardware component, to implement or perform the methods, steps, and logical block diagrams in each embodiment of the present disclosure. The general-purpose processor may be a microprocessor or the processor may also be any conventional processor, etc. The steps of the method disclosed in conjunction with the embodiments of the present disclosure may be directly embodied as performed by the hardware decode processor or performed with a combination of hardware in the decode processor and the software module. The software module may be located in random memory, flash memory, read-only memory, programmable read-only memory, or electrically rewritable programmable memory, registers, and other storage medium well established in the art. The storage medium is located in the memory and the processor reads the information in the memory and completes the steps of the above method in combination with its hardware.

It is understood that the memory in the embodiments of the present disclosure may be volatile memory or non-volatile memory, or may include both volatile and non-volatile memory. The non-volatile memory may be read-only memory (ROM), programmable ROM (PROM), erasable PROM (EPROM), electrically EPROM (EPROM), or flash memory. The volatile memory may be random access memory (RAM), which is used as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), Synch link DRAM (SLDRAM), and direct Rambus RAM (DR RAM). It should be noted that the memories of the systems and methods described herein are intended to include, but are not limited to, these and any other suitable types of memories.

It should be understood that the memory is exemplary but not limiting, for example, the memory in the embodiments of the present disclosure may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), direct Rambus ROM (DRAM), etc. That is, the memory in the embodiments of the present disclosure is intended to include, but is not limited to, these and any other suitable types of memory.

The embodiments of the present disclosure further provide a computer-readable storage medium for storing a computer program.

In some embodiments, the computer-readable storage medium may be applied to the network device or base station in the embodiments of the present disclosure, and the computer program enables the computer to perform the corresponding processes implemented by the network device or base station in each method of the embodiments of the present disclosure, which will not be repeated here for brevity.

In some embodiments, the computer-readable storage medium may be applied to the mobile terminal/terminal device in the embodiments of the present disclosure, and the computer program causes the computer to perform the corresponding processes implemented by the mobile terminal/terminal device in each of the methods of the embodiments of the present disclosure, which will not be repeated herein for brevity.

The embodiments of the present disclosure further provide a computer program product including computer program instructions.

In some embodiments, the computer program product may be applied to the network device or base station in the embodiments of the present disclosure, and the computer program instructions cause the computer to perform the corresponding processes implemented by the network device or base station in each of the methods of the embodiments of the present disclosure, which will not be repeated herein for brevity.

In some embodiments, the computer program product may be applied to the mobile terminal/terminal device in the embodiments of the present disclosure, and the computer program instructions cause the computer to perform the corresponding processes implemented by the mobile terminal/terminal device in each of the methods of the embodiments of the present disclosure, which will not be repeated herein for brevity.

The embodiments of the present disclosure further provide a computer program.

In some embodiments, the computer program may be applied to the network device or base station in the embodiments of the present disclosure, and when the computer program is run on the computer, it causes the computer to perform the corresponding processes implemented by the network device or base station in each of the methods of the embodiments of the present disclosure, which will not be repeated here for brevity.

In some embodiments, the computer program may be applied to the mobile terminal/terminal device in the embodiments of the present disclosure, and when the computer program is run on the computer, causes the computer to perform the corresponding processes implemented by the mobile terminal/terminal device in each of the methods of the embodiments of the present disclosure, which will not be repeated herein for brevity.

Those skilled in the art can realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of the present disclosure.

It will be clear to those skilled in the art that, for the convenience and brevity of description, the specific working processes of the systems, devices, and units described above can be referred to the corresponding processes in the preceding method embodiments and will not be repeated here.

In the several embodiments provided in the present disclosure, it should be understood that the disclosed systems, devices, and methods, can be implemented in other ways. For example, the embodiments of the devices described above are merely schematic, for example, the division of the units described, which is only a logical functional division, may be divided in another way when actually implemented, for example, multiple units or components may be combined or may be integrated into another system, or some features may be ignored, or not implemented. On another point, the mutual coupling or direct coupling or communication connection shown or discussed may be an indirect coupling or communication connection through some interface, device, or unit, which may be electrical, mechanical, or in other forms.

The units illustrated as separate components may or may not be physically separated, and the components displayed as units may or may not be physical units, i.e., they may be located in one place or may be distributed to multiple network units. Some or all of these units may be selected according to practical needs to achieve the purpose of the embodiment solution.

Alternatively, each functional unit in each embodiment of the present disclosure may be integrated in a single processing unit, or each unit may be physically present separately, or two or more units may be integrated in a single unit.

The functions described may be stored in a computer-readable storage medium if they are implemented in the form of a software functional unit and sold or used as a separate product. It is understood that the technical solution of the present disclosure, or the part of the technical solution that essentially contributes to the prior art, may be embodied in the form of a software product that is stored in a storage medium and includes multiple instructions to cause a computer device (which may be a personal computer, a server, or a network device, etc.) to perform all or some of the steps of the method described in various embodiments of the present disclosure. The storage medium includes: USB flash drives, removable hard drives, read-only memory (ROM), random access memory (RAM), disks, or CD-ROMs, and other media that can store program code.

The above mentioned is only a specific implementation of the present disclosure, but the scope of the present disclosure is not limited to this. Any technical person familiar with the art can easily think of changes or substitutions within the technical scope disclosed in the present disclosure, which should be covered by the scope of the present disclosure. Therefore, the scope of the present disclosure shall be subject to the scope of the appended claims.

## Claims

1. A wireless communication method, comprising:
receiving (S210), by a terminal device, a dedicated radio resource control, RRC, message sent by a first network device; wherein the dedicated RRC message comprises: first information for cell selection or cell reselection or network device access;
receiving (S220), by the terminal device, a first system information block, SIB, message sent by a second network device; wherein the first SIB message comprises: second information for cell selection or cell reselection or network device access; and
performing (S230), by the terminal device, selection or reselection of a target cell or network device access according to the first information;
**characterized in that**:
the first information is related to a slice and the second information is related to a slice;
wherein before the performing (S230), by the terminal device, selection or reselection of a target cell or network device access according to the first information, the method further comprises:
determining, by the terminal device, whether a preset condition is met,
wherein the performing (S230), by the terminal device, selection or reselection of a target cell or network device access according to the first information comprises:
performing, by the terminal device, the selection or reselection of the target cell or the network device access according to the first information, in response to the preset condition being met, wherein the preset condition comprises that the first information and the second information are different.

2. The method according to claim 1, wherein the performing (S230), by the terminal device, selection or reselection of a target cell or network device access according to the first information is determined according to a preset rule.

3. The method according to claim 2, wherein the preset rule is related to at least one of the first network device, the second network device, the terminal device, the second information, and the first information.

4. The method according to claim 3, wherein the selection or reselection of the target cell or the network device access is performed according to the first information, in response to the preset rule comprising at least one of:
the first network device supporting a slice;
the first network device being capable of broadcasting slice information;
the first network device being a network device after the Release 17;
the second network device un-supporting a slice;
the second network device being not capable of broadcasting slice information;
the second network device being not a network device after the Release 17;
the first information comprising cell selection or cell reselection information or network device access information for a first slice or a first slice group;
information indicated in the first information being for the cell selection or cell reselection information or network device access information for the first slice or the first slice group;
the first information comprising the cell selection or cell reselection information or network device access information corresponding to a first parameter or a first parameter group;
information indicated in the first information being for the cell selection or cell reselection information or network device access information corresponding to the first parameter or the first parameter group;
the terminal device supporting a slice;
the terminal device being a terminal after the Release 17;
the terminal device having required slices; and
the selection or reselection of the target cell or the network device access being performed according to the first information by default;
wherein the first slice is configured to perform the selection or reselection of the target cell or the network device access, or the first slice is a slice required by the terminal device; the first slice group is configured to perform the selection or reselection of the target cell or the network device access, or the first slice group is a slice group required by the terminal device; the first parameter corresponds to the first slice; the first parameter group corresponds to the first slice group.

5. The method according to claim 3, wherein the selection or reselection of the target cell or the network device access is performed according to the first information, in response to the preset rule comprising at least one of:
the first network device supporting a slice.
the first network device being capable of broadcasting slice information;
the first network device being a network device after the Release 17;
the second network device un-supporting a slice;
the second network device being not capable of broadcasting slice information;
the second network device being not a network device after the Release 17;
the first information un-comprising the cell selection or cell reselection information or network device access information for a first slice or a first slice group, and the terminal device un-supporting a slice;
the first information un-comprising the cell selection or cell reselection information or network device access information for the first slice or the first slice group, and the terminal device being not a terminal after the Release 17;
the first information un-comprising the cell selection or cell reselection information or network device access information for the first slice or the first slice group, and the terminal device not having required slices;
information indicated in the first information being not for the cell selection or cell reselection information or network device access information for the first slice or the first slice group, and the terminal device un-supporting a slice;
the information indicated in the first information being not for the cell selection or cell reselection information or network device access information for the first slice or the first slice group, and the terminal device being not a terminal after the Release 17;
the information indicated in the first information being not for the cell selection or cell reselection information or network device access information for the first slice or first slice group, and the terminal device not having required slices;
the first information un-comprising the cell selection or cell reselection information or network device access information corresponding to a first parameter or a first parameter group, and the terminal device un-supporting a slice;
the first information un-comprising the cell selection or cell reselection information or network device access information corresponding to the first parameter or the first parameter group, and the terminal device being not a terminal after the Release 17;
the first information un-comprising the cell selection or cell reselection information or network device access information corresponding to the first parameter or the first parameter group, and the terminal device not having required slices;
the information indicated in the first information being not for the cell selection or cell reselection information or network device access information corresponding to the first parameter or the first parameter group, and the terminal device un-supporting a slice;
the information indicated in the first information being not for the cell selection or cell reselection information or network device access information corresponding to the first parameter or the first parameter group, and the terminal device being not a terminal after the Release 17;
the information indicated in the first information being not for the cell selection or cell reselection information or network device access information corresponding to the first parameter or the first parameter group, and the terminal device not having required slices; and
target cell selection or cell reselection or network device access being performed according to the first information by default;
wherein the first slice is configured to perform the selection or reselection of the target cell or the network device access, or the first slice is a slice required by the terminal device; the first slice group is configured to perform the selection or reselection of the target cell or the network device access, or the first slice group is a slice group required by the terminal device; the first parameter corresponds to the first slice; the first parameter group corresponds to the first slice group.

6. The method according to claim 2, wherein the dedicated RRC message and/or the first SIB message further comprises at least one of:
an application range of the first information, a first preset time period, first indication information, an application range of the second information, and second indication information; or
the first information and/or the second information further comprises at least one of:
an application range of the first information, a first preset time period, first indication information, an application range of the second information, and second indication information;
wherein the first preset time period is a time period in which the selection or reselection of the target cell or the network device access is performed according to the first information; the first indication information is configured to indicate whether the selection or reselection of the target cell or the network device access is performed according to the first information; the second indication information is configured to indicate whether the selection or reselection of the target cell or the network device access is performed according to the second information.

7. The method according to claim 6, wherein the dedicated RRC message further comprises at least one of: the application range of the first information, the first preset time period, and the first indication information;
the first SIB message further comprises at least one of: the application range of the second information and the second indication information;
wherein the preset rule is related to at least one of:
the application range of the first information, the first information, the first preset time period, the first indication information, the application range of the second information, the second indication information, the first SIB message, a second SIB message sent by the first network device, the first network device, the second network device, and a slice required by the terminal device.

8. The method according to claim 7, wherein the preset rule is related to at least one of the first indication information and the second indication information.

9. The method according to claim 7, wherein the preset rule is related to at least one of the first indication information, the second indication information, the application range of the first information, and the application range of the second information.

10. The method according to claim 7, wherein the present rule is related to at least one of the application range of the first information, the first information, the first SIB message, the second SIB message, and the slice required by the terminal device.

11. The method according to claim 7, wherein the preset rule is related to at least one of the first network device, the second network device, and the terminal device.

12. The method according to claim 1, wherein the preset condition further comprises at least one of:
the terminal device supporting a slice;
the terminal device having required slices;
the terminal device being a terminal after the Release 17;
the first network device supporting a slice;
the first network device being capable of broadcasting slice information;
the first network device being a network device after the Release 17;
the second network device supporting a slice;
the second network device being capable of broadcasting slice information;
the second network device being a network device after the Release 17; and
a slice supported by the network device being the slice required by the terminal device.

13. The method according to any one of claims 1-12, wherein the dedicated RRC message is an RRC release message.

14. The method according to any one of claims 1-13, wherein the first information comprises at least one of: cell information, frequency point information, area information, public land mobile network, PLMN, information, tracking area, TA, information, allowed closed access group, CAG, list, allowed closed subscriber group, CSG, list, disallowed CAG list, and disallowed CSG list; and/or
the second information comprises at least one of: cell information, frequency information, area information, PLMN information, TA information, allowed CAG list, allowed CSG list, disallowed CAG list, and disallowed CSG list.

15. The method according to claim 14, wherein the frequency point information comprises frequency point priority information.

16. A terminal device (400), comprising a processor (410) and a memory (420); **characterized in that** the memory (420) is configured to store a computer program, and the processor (410) is configured to call and run the computer program stored in the memory (420) to perform the method according to any one of claims 1-15.

## Patentansprüche

1. Drahtloskommunikationsverfahren, das Folgendes umfasst:
Empfangen (S210), durch eine Endgerätevorrichtung, einer dedizierten Funkressourcensteuerungs- bzw. RRC-Nachricht, die durch eine erste Netzvorrichtung gesendet wird; wobei die dedizierte RRC-Nachricht Folgendes umfasst: erste Informationen für Zellenauswahl oder Zellenneuauswahl oder Netzvorrichtungszugriff;
Empfangen (S220), durch die Endgerätevorrichtung, einer ersten Systeminformationsblock- bzw. SIB-Nachricht, die durch eine zweite Netzvorrichtung gesendet wird; wobei die erste SIB-Nachricht Folgendes umfasst: zweite Informationen für Zellenauswahl oder Zellenneuauswahl oder Netzvorrichtungszugriff; und
Durchführen (S230), durch die Endgerätevorrichtung, einer Auswahl oder Neuauswahl einer Zielzelle oder eines Netzvorrichtungszugriffs gemäß den ersten Informationen;
**dadurch gekennzeichnet, dass**:
die ersten Informationen mit einem Slice im Zusammenhang stehen und die zweiten Informationen mit einem Slice im Zusammenhang stehen;
wobei das Verfahren vor dem Durchführen (S230), durch die Endgerätevorrichtung, der Auswahl oder Neuauswahl einer Zielzelle oder eines Netzvorrichtungszugriffs gemäß den ersten Informationen ferner Folgendes umfasst:
Bestimmen, durch die Endgerätevorrichtung, ob eine voreingestellte Bedingung erfüllt ist,
wobei das Durchführen (S230), durch die Endgerätevorrichtung, einer Auswahl oder Neuauswahl einer Zielzelle oder eines Netzvorrichtungszugriffs gemäß den ersten Informationen Folgendes umfasst:
Durchführen, durch die Endgerätevorrichtung, der Auswahl oder Neuauswahl der Zielzelle oder des Netzvorrichtungszugriffs gemäß den ersten Informationen als Reaktion darauf, dass die voreingestellte Bedingung erfüllt ist, wobei die voreingestellte Bedingung umfasst, dass die ersten Informationen und die zweiten Informationen unterschiedlich sind.

2. Verfahren nach Anspruch 1, wobei das Durchführen (S230), durch die Endgerätevorrichtung, einer Auswahl oder Neuauswahl einer Zielzelle oder eines Netzvorrichtungszugriffs gemäß den ersten Informationen gemäß einer voreingestellten Regel bestimmt wird.

3. Verfahren nach Anspruch 2, wobei die voreingestellte Regel mit der ersten Netzvorrichtung und/oder der zweiten Netzvorrichtung und/oder der Endgerätevorrichtung und/oder den zweiten Informationen und/oder den ersten Informationen im Zusammenhang steht.

4. Verfahren nach Anspruch 3, wobei die Auswahl oder Neuauswahl der Zielzelle oder der Netzvorrichtungszugriff gemäß den ersten Informationen als Reaktion darauf durchgeführt wird, dass die voreingestellte Regel mindestens eines der Folgenden umfasst:
die erste Netzvorrichtung unterstützt ein Slice;
die erste Netzvorrichtung ist in der Lage, Slice-Informationen rundzusenden;
die erste Netzvorrichtung ist eine Netzvorrichtung nach Release 17;
die zweite Netzvorrichtung unterstützt ein Slice nicht;
die zweite Netzvorrichtung ist nicht in der Lage, Slice-Informationen rundzusenden;
die zweite Netzvorrichtung ist keine Netzvorrichtung nach Release 17;
die ersten Informationen umfassen Zellenauswahl- oder Zellenneuauswahlinformationen oder Netzvorrichtungszugriffsinformationen für ein erstes Slice oder eine erste Slice-Gruppe;
Informationen, die in den ersten Informationen angegeben sind, sind für die Zellenauswahl- oder Zellenneuauswahlinformationen oder Netzvorrichtungszugriffsinformationen für das erste Slice oder die erste Slice-Gruppe vorgesehen;
die ersten Informationen umfassen die Zellenauswahl- oder Zellenneuauswahlinformationen oder Netzvorrichtungszugriffsinformationen, die einem ersten Parameter oder einer ersten Parametergruppe entsprechen; Informationen, die in den ersten Informationen angegeben sind, sind für die Zellenauswahl- oder Zellenneuauswahlinformationen oder Netzvorrichtungszugriffsinformationen vorgesehen, die dem ersten Parameter oder der ersten Parametergruppe entsprechen;
die Endgerätevorrichtung unterstützt ein Slice;
die Endgerätevorrichtung ist eine Endgerätevorrichtung nach dem Release 17;
die Endgerätevorrichtung weist erforderliche Slices auf; und
die Auswahl oder Neuauswahl der Zielzelle oder der Netzvorrichtungszugriff wird standardmäßig gemäß den ersten Informationen durchgeführt wird;
wobei das erste Slice dazu ausgelegt ist, die Auswahl oder Neuauswahl der Zielzelle oder den Netzvorrichtungszugriff durchzuführen, oder das erste Slice ein Slice ist, der von der Endgerätevorrichtung benötigt wird; die erste Slice-Gruppe dazu ausgelegt ist, die Auswahl oder Neuauswahl der Zielzelle oder den Netzvorrichtungszugriff durchzuführen, oder die erste Slice-Gruppe eine Slice-Gruppe ist, die von der Endgerätevorrichtung benötigt wird; der erste Parameter dem ersten Slice entspricht; die erste Parametergruppe der ersten Slice-Gruppe entspricht.

5. Verfahren nach Anspruch 3, wobei die Auswahl oder Neuauswahl der Zielzelle oder der Netzvorrichtungszugriff gemäß den ersten Informationen als Reaktion darauf durchgeführt wird, dass die voreingestellte Regel mindestens eines der Folgenden umfasst:
die erste Netzvorrichtung unterstützt ein Slice;
die erste Netzvorrichtung ist in der Lage, Slice-Informationen rundzusenden;
die erste Netzvorrichtung ist eine Netzvorrichtung nach Release 17;
die zweite Netzvorrichtung unterstützt ein Slice nicht;
die zweite Netzvorrichtung ist nicht in der Lage, Slice-Informationen rundzusenden;
die zweite Netzvorrichtung ist keine Netzvorrichtung nach Release 17;
die ersten Informationen umfassen die Zellenauswahl- oder Zellenneuauswahlinformationen oder Netzvorrichtungszugriffsinformationen für ein erstes Slice oder eine erste Slice-Gruppe nicht und die Endgerätevorrichtung unterstützt ein Slice nicht;
die ersten Informationen umfassen die Zellenauswahl- oder Zellenneuauswahlinformationen oder Netzvorrichtungszugriffsinformationen für das erste Slice oder die erste Slice-Gruppe nicht und die Endgerätevorrichtung ist keine Endgerätevorrichtung nach dem Release 17;
die ersten Informationen umfassen die Zellenauswahl- oder Zellenneuauswahlinformationen oder Netzvorrichtungszugriffsinformationen für das erste Slice oder die erste Slice-Gruppe nicht und die Endgerätevorrichtung weist keine erforderlichen Slices auf;
Informationen, die in den ersten Informationen angegeben sind, sind nicht für die Zellenauswahl- oder Zellenneuauswahlinformationen oder Netzvorrichtungszugriffsinformationen für das erste Slice oder die erste Slice-Gruppe vorgesehen und die Endgerätevorrichtung unterstützt ein Slice nicht;
die Informationen, die in den ersten Informationen angegeben sind, sind nicht für die Zellenauswahl- oder Zellenneuauswahlinformationen oder Netzvorrichtungszugriffsinformationen für das erste Slice oder die erste Slice-Gruppe vorgesehen und die Endgerätevorrichtung ist keine Endgerätevorrichtung nach dem Release 17;
die Informationen, die in den ersten Informationen angegeben sind, sind nicht für die Zellenauswahl- oder Zellenneuauswahlinformationen oder Netzvorrichtungszugriffsinformationen für das erste Slice oder die erste Slice-Gruppe vorgesehen und die Endgerätevorrichtung weist keine erforderlichen Slices auf;
die ersten Informationen umfassen die Zellenauswahl- oder Zellenneuauswahlinformationen oder Netzvorrichtungszugriffsinformationen, die einem ersten Parameter oder einer ersten Parametergruppe entsprechen, nicht und die Endgerätevorrichtung unterstützt ein Slice nicht;
die ersten Informationen umfassen die Zellenauswahl- oder Zellenneuauswahlinformationen oder Netzvorrichtungszugriffsinformationen, die dem ersten Parameter oder der ersten Parametergruppe entsprechen, nicht und die Endgerätevorrichtung ist keine Endgerätevorrichtung nach dem Release 17;
die ersten Informationen umfassen die Zellenauswahl- oder Zellenneuauswahlinformationen oder Netzvorrichtungszugriffsinformationen, die dem ersten Parameter oder der ersten Parametergruppe entsprechen, nicht und die Endgerätevorrichtung weist keine erforderlichen Slices auf;
die Informationen, die in den ersten Informationen angegeben sind, sind nicht für die Zellenauswahl- oder Zellenneuauswahlinformationen oder Netzvorrichtungszugriffsinformationen, die dem ersten Parameter oder der ersten Parametergruppe entsprechen, vorgesehen und die Endgerätevorrichtung unterstützt ein Slice nicht;
die Informationen, die in den ersten Informationen angegeben sind, sind nicht für die Zellenauswahl- oder Zellenneuauswahlinformationen oder Netzvorrichtungszugriffsinformationen, die dem ersten Parameter oder der ersten Parametergruppe entsprechen, vorgesehen und die Endgerätevorrichtung ist keine Endgerätevorrichtung nach dem Release 17;
die Informationen, die in den ersten Informationen angegeben sind, sind nicht für die Zellenauswahl- oder Zellenneuauswahlinformationen oder Netzvorrichtungszugriffsinformationen, die dem ersten Parameter oder der ersten Parametergruppe entsprechen, vorgesehen und die Endgerätevorrichtung weist keine erforderlichen Slices auf; und
Zielzellenauswahl oder Zellenneuauswahl oder Netzvorrichtungszugriff wird standardmäßig gemäß den ersten Informationen durchgeführt;
wobei das erste Slice dazu ausgelegt ist, die Auswahl oder Neuauswahl der Zielzelle oder den Netzvorrichtungszugriff durchzuführen, oder das erste Slice ein Slice ist, der von der Endgerätevorrichtung benötigt wird; die erste Slice-Gruppe dazu ausgelegt ist, die Auswahl oder Neuauswahl der Zielzelle oder den Netzvorrichtungszugriff durchzuführen, oder die erste Slice-Gruppe eine Slice-Gruppe ist, die von der Endgerätevorrichtung benötigt wird; der erste Parameter dem ersten Slice entspricht; die erste Parametergruppe der ersten Slice-Gruppe entspricht.

6. Verfahren nach Anspruch 2, wobei die dedizierte RRC-Nachricht und/oder die erste SIB-Nachricht ferner mindestens eines der Folgenden umfasst:
einen Anwendungsbereich der ersten Informationen, einen ersten voreingestellten Zeitraum, erste Angabeinformationen, einen Anwendungsbereich der zweiten Informationen und zweite Angabeinformationen; oder
die ersten Informationen und/oder die zweiten Informationen ferner mindestens eines der Folgenden umfassen:
einen Anwendungsbereich der ersten Informationen, einen ersten voreingestellten Zeitraum, erste Angabeinformationen, einen Anwendungsbereich der zweiten Informationen und zweite Angabeinformationen;
wobei der erste voreingestellte Zeitraum ein Zeitraum ist, in dem die Auswahl oder Neuauswahl der Zielzelle oder der Netzvorrichtungszugriff gemäß den ersten Informationen durchgeführt wird; die ersten Angabeinformationen dazu ausgelegt sind, anzugeben, ob die Auswahl oder Neuauswahl der Zielzelle oder der Netzvorrichtungszugriff gemäß den ersten Informationen durchgeführt wird; die zweiten Angabeinformationen dazu ausgelegt sind, anzugeben, ob die Auswahl oder Neuauswahl der Zielzelle oder der Netzvorrichtungszugriff gemäß den zweiten Informationen durchgeführt wird.

7. Verfahren nach Anspruch 6, wobei die dedizierte RRC-Nachricht ferner mindestens eines der Folgenden umfasst:
den Anwendungsbereich der ersten Informationen, den ersten voreingestellten Zeitraum und die ersten Angabeinformationen;
die erste SIB-Nachricht ferner mindestens eines der Folgenden umfasst: den Anwendungsbereich der zweiten Informationen und die zweiten Angabeinformationen;
wobei die voreingestellte Regel mit mindestens einem der Folgenden im Zusammenhang steht:
dem Anwendungsbereich der ersten Informationen, den ersten Informationen, dem ersten voreingestellten Zeitraum, den ersten Angabeinformationen, dem Anwendungsbereich der zweiten Informationen, den zweiten Angabeinformationen, der ersten SIB-Nachricht, einer zweiten SIB-Nachricht, die durch die erste Netzvorrichtung gesendet wird, der ersten Netzvorrichtung, der zweiten Netzvorrichtung und einem Slice, das von der Endgerätevorrichtung benötigt wird.

8. Verfahren nach Anspruch 7, wobei die voreingestellte Regel mit den ersten Angabeinformationen und/oder die zweiten Angabeinformationen im Zusammenhang steht.

9. Verfahren nach Anspruch 7, wobei die voreingestellte Regel mit den ersten Angabeinformationen und/oder den zweiten Angabeinformationen und/oder dem Anwendungsbereich der ersten Informationen und/oder dem Anwendungsbereich der zweiten Informationen im Zusammenhang steht.

10. Verfahren nach Anspruch 7, wobei die voreingestellte Regel mit dem Anwendungsbereich der ersten Informationen und/oder den ersten Informationen und/oder der ersten SIB-Nachricht und/oder der zweiten SIB-Nachricht und/oder dem Slice, das von der Endgerätevorrichtung benötigt wird, im Zusammenhang steht.

11. Verfahren nach Anspruch 7, wobei die voreingestellte Regel mit der ersten Netzvorrichtung und/oder der zweiten Netzvorrichtung und/oder der Endgerätevorrichtung im Zusammenhang steht.

12. Verfahren nach Anspruch 1, wobei die voreingestellte Bedingung ferner mindestens eines der Folgenden umfasst:
die Endgerätevorrichtung unterstützt ein Slice;
die Endgerätevorrichtung weist erforderliche Slices auf;
die Endgerätevorrichtung ist eine Endgerätevorrichtung nach dem Release 17;
die erste Netzvorrichtung unterstützt ein Slice;
die erste Netzvorrichtung ist in der Lage, Slice-Informationen rundzusenden;
die erste Netzvorrichtung ist eine Netzvorrichtung nach Release 17;
die zweite Netzvorrichtung unterstützt ein Slice;
die zweite Netzvorrichtung ist in der Lage, Slice-Informationen rundzusenden;
die zweite Netzvorrichtung ist eine Netzvorrichtung nach Release 17; und
ein durch die Netzvorrichtung unterstütztes Slice ist das von der Endgerätevorrichtung benötigte Slice.

13. Verfahren nach einem der Ansprüche 1-12, wobei die dedizierte RRC-Nachricht eine RRC-Freigabenachricht ist.

14. Verfahren nach einem der Ansprüche 1-13, wobei die ersten Informationen mindestens eines der Folgenden umfassen: Zelleninformationen, Frequenzpunktinformationen, Bereichsinformationen, Öffentliches-Landmobilnetz- bzw. PLMN-Informationen, Verfolgungsbereichs- bzw. TA-Informationen, zulässige Geschlossene-Zugriffsgruppe- bzw. CAG-Liste, zulässige Geschlossene-Teilnehmergruppe- bzw. CSG-Liste, unzulässige CAG-Liste und unzulässige CSG-Liste; und/oder
die zweiten Informationen mindestens eines der Folgenden umfassen: Zelleninformationen, Frequenzinformationen, Bereichsinformationen, PLMN-Informationen, TA-Informationen, zulässige CAG-Liste, zulässige CSG-Liste, unzulässige CAG-Liste und unzulässige CSG-Liste.

15. Verfahren nach Anspruch 14, wobei die Frequenzpunktinformationen Frequenzpunktprioritätsinformationen umfassen.

16. Endgerätevorrichtung (400), die einen Prozessor (410) und einen Speicher (420) umfasst; **dadurch gekennzeichnet, dass** der Speicher (420) dazu ausgelegt ist, ein Computerprogramm zu speichern, und der Prozessor (410) dazu ausgelegt ist, das in dem Speicher (420) gespeicherte Computerprogramm aufzurufen und auszuführen, um das Verfahren nach einem der Ansprüche 1-15 durchzuführen.

## Revendications

1. Procédé de communication sans fil, le procédé comprenant les étapes suivantes :
recevoir (S210), par un dispositif terminal, un message de contrôle des ressources radio, RRC, dédié émis par un premier dispositif réseau ; où le message RRC dédié comprend : des premières informations de sélection de cellule, de resélection de cellule ou d'accès à un dispositif réseau ;
recevoir (S220), par le dispositif terminal, un premier message de bloc d'informations système, SIB, envoyé par un deuxième dispositif réseau ; où le premier message SIB comprend : des deuxièmes informations pour la sélection de cellule, la resélection de cellule ou l'accès à un dispositif réseau ; et
réaliser (S230), par le dispositif terminal, une sélection ou une resélection d'une cellule cible ou un accès à un dispositif réseau conformément aux premières informations ;
**caractérisé en ce que** :
les premières informations sont liées à une tranche et les deuxièmes informations sont liées à une tranche ;
où, préalablement à la réalisation (S230), par le dispositif terminal, d'une sélection ou d'une resélection d'une cellule cible ou d'un accès à un dispositif réseau conformément aux premières informations, le procédé comprend en outre les étapes suivantes :
déterminer, par le dispositif terminal, si une condition prédéterminée est satisfaite,
où la réalisation (S230), par le dispositif terminal, de la sélection ou de la resélection d'une cellule cible ou d'un accès à un dispositif réseau conformément aux premières informations comprend les étapes suivantes : exécuter, par le dispositif terminal, la sélection ou la resélection de la cellule cible ou l'accès au dispositif réseau conformément aux premières informations, en réponse au fait que la condition prédéfinie est satisfaite, la condition prédéfinie comprenant que les premières informations et les deuxièmes informations soient différentes.

2. Procédé selon la revendication 1, dans lequel la réalisation (S230), par le dispositif terminal, d'une sélection ou d'une resélection d'une cellule cible ou d'un l'accès à un dispositif réseau conformément aux premières informations est déterminée conformément à une règle prédéfinie.

3. Procédé selon la revendication 2, dans lequel la règle prédéfinie est liée à au moins l'un parmi le premier dispositif réseau, le deuxième dispositif réseau, le dispositif terminal, les deuxièmes informations et les premières informations.

4. Procédé selon la revendication 3, dans lequel la sélection ou la resélection de la cellule cible ou l'accès au dispositif réseau est effectué conformément aux premières informations, en réponse à la règle prédéfinie comprenant au moins l'une des conditions suivantes :
le premier dispositif réseau supporte une tranche ;
le premier dispositif réseau est apte à diffuser des informations de tranche ;
Le premier dispositif réseau est un dispositif réseau postérieur à la version 17 ;
le deuxième dispositif réseau ne supporte pas une tranche ;
le deuxième dispositif réseau n'est pas capable de diffuser des informations de tranche ;
le deuxième dispositif réseau n'est pas un dispositif réseau postérieur à la version 17 ;
les premières informations comprennent des informations de sélection de cellule ou de resélection de cellule ou des informations d'accès au dispositif réseau pour une première tranche ou un premier groupe de tranches ;
les informations indiquées dans les premières informations concernent des informations de sélection de cellule ou de resélection de cellule ou des informations d'accès au dispositif réseau pour la première tranche ou le premier groupe de tranches ;
les premières informations comprennent les informations de sélection de cellule ou de resélection de cellule ou des informations d'accès au dispositif réseau correspondant à un premier paramètre ou à un premier groupe de paramètres ;
les informations indiquées dans les premières informations concernent des informations de sélection de cellule ou de resélection de cellule ou des informations d'accès au dispositif réseau correspondant au premier paramètre ou au premier groupe de paramètres ;
le dispositif terminal supporte une tranche ;
le dispositif terminal est un terminal postérieur à la version 17 ;
le dispositif terminal a les tranches requises ; et
la sélection ou la resélection de la cellule cible ou l'accès au dispositif réseau est effectué conformément aux premières informations par défaut ;
où la première tranche est configurée pour réaliser la sélection ou la resélection de la cellule cible ou l'accès au dispositif réseau, ou la première tranche est une tranche requise par le dispositif terminal ; le premier groupe de tranches est configuré pour réaliser la sélection ou la resélection de la cellule cible ou l'accès au dispositif réseau, ou le premier groupe de tranches est un groupe de tranches requis par le dispositif terminal ; le premier paramètre correspond à la première tranche ; le premier groupe de paramètres correspond au premier groupe de tranches.

5. Procédé selon la revendication 3, dans lequel la sélection ou la resélection de la cellule cible ou l'accès au dispositif réseau est effectué conformément aux premières informations, en réponse à la règle prédéfinie comprenant au moins l'une des conditions suivantes :
le premier dispositif réseau supporte une tranche ;
le premier dispositif réseau est apte à diffuser des informations de tranche ;
Le premier dispositif réseau est un dispositif réseau postérieur à la version 17 ;
le deuxième dispositif réseau ne supporte pas une tranche ;
le deuxième dispositif réseau n'est pas capable de diffuser des informations de tranche ;
le deuxième dispositif réseau n'est pas un dispositif réseau postérieur à la version 17 ;
les premières informations ne comprennent pas les informations de sélection de cellule ou de resélection de cellule ou les informations d'accès au dispositif réseau pour une première tranche ou un premier groupe de tranches, et le dispositif terminal ne supporte pas une tranche ;
les premières informations ne comprennent pas les informations de sélection de cellule ou de resélection de cellule ou les informations d'accès au dispositif réseau pour la première tranche ou le premier groupe de tranches, et le dispositif terminal n'est pas un terminal postérieur à la version 17 ;
les premières informations ne comprennent pas les informations de sélection de cellule ou de resélection de cellule ou les informations d'accès au dispositif réseau pour la première tranche ou le premier groupe de tranches, et le dispositif terminal n'a pas les tranches requises ;
les informations indiquées dans les premières informations ne sont pas pour les informations de sélection de cellule ou les informations de resélection de cellule ou les informations d'accès au dispositif réseau pour la première tranche ou le premier groupe de tranches, et le dispositif terminal ne supporte pas une tranche ;
les informations indiquées dans les premières informations ne sont pas pour les informations de sélection de cellule ou les informations de resélection de cellule ou les informations d'accès au dispositif réseau pour la première tranche ou le premier groupe de tranches, et le dispositif terminal n'est pas un terminal postérieur à la version 17 ;
les informations indiquées dans les premières information ne sont pas destinées aux information de sélection de cellule ou de resélection de cellule ou aux informations d'accès au dispositif réseau pour la première tranche ou le premier groupe de tranches, et le dispositif terminal n'a pas les tranches requises ;
les premières informations ne comprennent pas les informations de sélection de cellule ou de resélection de cellule ou les informations d'accès au dispositif réseau correspondant à un premier paramètre ou à un premier groupe de paramètres, et le dispositif terminal ne supporte pas une tranche ;
les premières informations ne comprennent pas les informations de sélection de cellule ou de resélection de cellule ou les informations d'accès au dispositif réseau correspondant au premier paramètre ou au premier groupe de paramètres, et le dispositif terminal n'est pas un terminal postérieur à la version 17 ;
les premières informations ne comprennent pas les informations de sélection de cellule ou de resélection de cellule ou les informations d'accès au dispositif réseau correspondant au premier paramètre ou au premier groupe de paramètres, et le dispositif terminal n'a pas les tranches requises ;
les informations indiquées dans les premières informations ne sont pas pour les informations de sélection de cellule ou de resélection de cellule ou les informations d'accès au dispositif réseau correspondant au premier paramètre ou au premier groupe de paramètres, et le dispositif terminal ne supporte pas une tranche ;
les informations indiquées dans les premières informations ne sont pas pour les informations de sélection de cellule ou de resélection de cellule ou les informations d'accès au dispositif réseau correspondant au premier paramètre ou au premier groupe de paramètres, et le dispositif terminal n'est pas un terminal postérieur à la version 17 ;
les informations indiquées dans les premières informations ne sont pas pour les informations de sélection de cellule ou de resélection de cellule ou les informations d'accès au dispositif réseau correspondant au premier paramètre ou au premier groupe de paramètres, et le dispositif terminal n'a pas les tranches requises ; et
la sélection de cellule cible ou la resélection de cellule ou l'accès au dispositif réseau s'effectue par défaut conformément aux premières informations ;
où la première tranche est configurée pour réaliser la sélection ou la resélection de la cellule cible ou l'accès au dispositif réseau, ou la première tranche est une tranche requise par le dispositif terminal ; le premier groupe de tranches est configuré pour réaliser la sélection ou la resélection de la cellule cible ou l'accès au dispositif réseau, ou le premier groupe de tranches est un groupe de tranches requis par le dispositif terminal ; le premier paramètre correspond à la première tranche ; le premier groupe de paramètres correspond au premier groupe de tranches.

6. Procédé selon la revendication 2, dans lequel le message RRC dédié et/ou le premier message SIB comprend en outre au moins l'une parmi :
une plage d'application des premières informations, une première période de temps prédéfinie, des premières informations d'indication, une plage d'application des deuxièmes informations, et des deuxièmes informations d'indication ; ou
les premières informations et/ou les deuxièmes informations comprennent en outre au moins l'une parmi : une plage d'application des premières informations, une première période de temps prédéfinie, des premières informations d'indication, une plage d'application des deuxièmes informations, et des deuxièmes informations d'indication ;
où la première période de temps prédéfinie est une période de temps pendant laquelle la sélection ou la resélection de la cellule cible ou l'accès au dispositif réseau est effectué en fonction des premières informations ; les premières informations d'indication sont configurées pour indiquer si la sélection ou la resélection de la cellule cible ou l'accès au dispositif réseau est effectué conformément aux premières informations ; les deuxièmes informations d'indication sont configurées pour indiquer si la sélection ou la resélection de la cellule cible ou l'accès au dispositif réseau est effectué conformément aux deuxièmes informations.

7. Procédé selon la revendication 6, dans lequel le message RRC dédié comprend en outre au moins l'une parmi : la plage d'application des premières informations, la première période de temps prédéfinie et les premières informations d'indication ;
le premier message SIB comprend en outre au moins l'une parmi : la plage d'application des deuxièmes informations et les deuxièmes informations d'indication ;
où la règle prédéfinie est liée à au moins l'un parmi : la plage d'application des premières informations, les premières informations, la première période de temps prédéfinie, les premières informations d'indication, la plage d'application des deuxièmes informations, les deuxièmes informations d'indication, le premier message SIB, un deuxième message SIB envoyé par le premier dispositif réseau, le premier dispositif réseau, le deuxième dispositif réseau et une tranche requise par le dispositif terminal.

8. Procédé selon la revendication 7, dans lequel la règle prédéterminée est liée à au moins l'une des premières informations d'indication et des deuxièmes informations d'indication.

9. Procédé selon la revendication 7, dans lequel la règle prédéterminée est liée à au moins l'une des premières informations d'indication, des deuxièmes informations d'indication, de la plage d'application des premières informations et de la plage d'application des deuxièmes informations.

10. Procédé selon la revendication 7, dans lequel la présente règle est liée à au moins l'un de la plage d'application des premières informations, des premières informations, du premier message SIB, du deuxième message SIB et de la tranche requise par le dispositif terminal.

11. Procédé selon la revendication 7, dans lequel la règle prédéfinie est liée à au moins l'un parmi le premier dispositif réseau, le deuxième dispositif réseau et le dispositif terminal.

12. Procédé selon la revendication 1, dans lequel la condition prédéfinie comprend en outre au moins une des conditions suivantes :
le dispositif terminal supporte une tranche ;
le dispositif terminal a les tranches requises ;
le dispositif terminal est un terminal postérieur à la version 17 ;
le premier dispositif réseau supporte une tranche ;
le premier dispositif réseau est apte à diffuser des informations de tranche ;
le premier dispositif réseau est un dispositif réseau postérieur à la version 17 ;
le deuxième dispositif réseau supporte une tranche ;
le deuxième dispositif réseau est apte à diffuser des informations de tranche ;
le deuxième dispositif réseau est un dispositif réseau postérieur à la version 17 ; et
une tranche prise en charge par le dispositif réseau est la tranche requise par le dispositif terminal.

13. Procédé selon l'une quelconque des revendications 1 à 12, dans lequel le message RRC dédié est un message de libération RRC.

14. Procédé selon l'une quelconque des revendications 1 à 13, dans lequel les premières informations comprennent au moins l'une des suivantes : des informations de cellule, des informations de point de fréquence, des informations de zone, des informations de réseau mobile terrestre public, PLMN, des informations de zone de suivi, TA, une liste de groupe d'accès fermé autorisé, CAG, une liste de groupe d'abonnés fermé autorisé, CSG, une liste, liste de CAG interdit et une liste de CSG interdit ; et/ou
les deuxièmes informations comprennent au moins l'une parmi : des informations de cellule, des informations de fréquence, des informations de surface, des informations PLMN, des informations TA, une liste de CAG autorisé, une liste de CSG autorisé, une liste de CAG interdit et une liste de CSG interdit.

15. Procédé selon la revendication 14, dans lequel les informations de point de fréquence comprennent des informations de priorité de point de fréquence.

16. Dispositif terminal (400), comprenant un processeur (410) et une mémoire (420) ;**caractérisé en ce que** la mémoire (420) est configurée pour stocker un programme d'ordinateur, et le processeur (410) est configuré pour appeler et exécuter le programme d'ordinateur stocké dans la mémoire (420) afin d'exécuter le procédé selon l'une quelconque des revendications 1 à 15.
